# EUROPEAN PATENT SPECIFICATION

(11) **EP 4 172 647 B1**
(45) Date of publication and mention of the grant of the patent: **25.11.2026**
(21) Application number: 21730308.0
(22) Date of filing: 02.06.2021
(51) Int. Cl.: G01S 7/48, G01S 17/931, G01S 17/87, G01S 7/497, G01S 7/40, G01S 7/41, G01S 7/539, G01S 13/87, G01S 13/931, G01S 15/87, G01S 15/931

(54) **SELF-TEST METHOD FOR A RANGING SENSOR-ARRANGEMENT OF A WORK MACHINE**
SELBSTTESTVERFAHREN FÜR EINE ENTFERNUNGSMESSUNGSSENSORANORDNUNG EINER ARBEITSMASCHINE
PROCÉDÉ D'AUTO-TEST POUR UN AGENCEMENT DE CAPTEUR DE MESURE DE DISTANCE D'UNE MACHINE DE TRAVAIL

(30) Priority: 29.06.2020 SE 2030215
(43) Date of publication of application: 03.05.2023
(73) Proprietor: Epiroc Rock Drills Aktiebolag, 701 91 Örebro (SE)
(72) Inventor: LARSSON, Johan, 702 31 Örebro (SE); NOWÉN, Peter, 694 30 Halllsberg (SE); UPPGÅRD, Thomas, 703 75 Örebro (SE)
(74) Representative: Epiroc Rock Drills AB
(86) International application number: PCT/SE2021/050511
(87) International publication number: WO 2022/005358

(56) References cited:
- EP-A1- 3 299 839
- WO-A1-2019/187938
- WO-A1-2021/001171
- DE-A1- 10 055 457
- DE-A1- 102005 059 902
- DE-A1- 102018 215 228
- US-A1- 2016 282 874

## Description

### TECHNICAL FIELD

The present disclosure relates to a method and arrangement for a work machine. In particular, the disclosure relates to a computer-implemented method and arrangement for determining sensor visibility of one or more laser range scanners arranged on a work machine. The disclosure also relates to corresponding computer programs configured to cause execution of the method and a work machine.

### BACKGROUND

Day-to-day operations of mining and tunnelling typically involve cycles of drilling, bolting, and blasting using work machines, e.g., mining machines configured for performing such operations. Historically, work machines, such as trucks, loaders, drilling rigs and haulers, have been operated by an on-board operator present within the machine. However, in the constantly on-going process of improving safety, efficiency and productivity; such machines are to an increasing extent being configured for autonomous operation and/or remote operation. In some examples, a work machine, e.g., mining machine, may be used in a fully automated, autonomous mode during some aspects of the mining/tunnelling operation, while other aspects call for operator control, e.g., from a remote control room.

Autonomous or remote control operation of a work machine used in a mining or construction environment, e.g., a mining machine or tunnelling machine, is presented with a number of environmental challenges due to the harsh environment in which they operate. Not only is a mining or tunnelling environment constantly evolving due to the excavation process, but the excavation process may also bring about an environment with low visibility, e.g., due to dust from the excavation process.

In recent years, range detection techniques using one or more range detection sensors, e.g., laser range scanners, are used to support viable route determination and tramming assist for a work machine, e.g., a mining machine, performing a transport operation to relocate from a first position to a second position within the work environment, e.g., at a construction site, in a mine environment or in an underground mine environment. In the following, performing such transport operations will be referred to as tramming. One or more range detection sensors may be employed to determine a distance to the surrounding tunnel walls or other obstacles along the path, e.g., during autonomous tramming of a work machine and/or tramming in a remote control mode.

Range detection, e.g., using laser technology, provides the advantage of enabling accurate readings. However, in construction environments, e.g., tunnel construction environments or underground mine environments, range readings from a range detection sensor may be affected by dirt on a lens of the sensor or by pollution in an ambient air, e.g., from dust particles. The contaminated lens or the polluted air, may affect the accuracy of the range readings provided by the range detection sensor. A number of mechanical solutions have been developed to prevent such contamination, but there are still frequent situations when inaccurate range readings are received from the range detection sensors.

Inaccurate range readings are typically very short, e.g., reflecting a distance within the boundaries of the machine itself, or very long, e.g., reflecting the maximum distance measurable by the range detection sensor. These inaccurate range readings may, at least to a part, be disregarded. However, when a low number of valid readings have been detected in a set of readings retrieved by a range detection sensor, autonomous tramming and/or tramming in a remote control mode will be interrupted in wait for sensor cleansing.

Background art is known from automotive applications, e.g., through DE 10 2005 059902 A1, EP 3 299 839 A1, and DE 100 55 457 A1.

Further background art is disclosed in WO2019/187938 that discloses a computer implemented method for determining range detection sensor functionality based on a determination of said abnormal range readings. A disadvantage with disallowing autonomous tramming and/or tramming in a remote control mode based on a threshold number of abnormal readings, is that the on-going operation may be discontinued prematurely, e.g., due to a passing dust cloud or whirl of dust, causing undue productivity losses. Consequently, there is a need for an improved solutions for determining range detection functionality.

### SUMMARY

It is therefore an object of the present disclosure to provide a method, a computer program product, a tramming assist arrangement, and a work machine that seeks to mitigate, alleviate, or eliminate all or at least some of the above-discussed drawbacks of presently known solutions.

This and other objects are achieved by means of a method, a computer program product, a tramming assist arrangement, and a work machine as defined in the appended claims. The term exemplary is in the present context to be understood as serving as an instance, example or illustration.

According to a first aspect of the present disclosure, a computer-implemented method for diagnosing a level of dust impact on one or more range detection sensors in a tramming assist arrangement of a work machine is provided. The work machine is configured for autonomous tramming and/or remote control tramming at a construction site or in a mine environment. The one or more laser range scanners being configured to determine a distance from the respective sensor to path barriers present along a path travelled by the tramming work machine. The method comprises, for each laser range scanner, obtaining a set of range readings; each range reading comprising a measured distance. The method further comprises attributing range reading comprising measured distances within configurable intervals to respective groups of range readings based on the measured distances, and determining a level of dust impact on sensor visibility for the respective laser range scanners based on the range readings attributed to the respective groups. The method further comprises reducing velocity of the work machine from a default tramming velocity when diagnosing a level of dust impact above a set threshold level and repeating the steps for determining sensor visibility for an obtained further set of range readings and resuming the default tramming velocity when the determining does not indicate reduced visibility of at least one laser range scanner in the travelling direction.

The disclosed method has the advantage of improving accuracy and consistency for existing tramming assist arrangements, e.g., as used in a mining machine in mine environment or in a work machine used in a construction site environment. The disclosed method provides for accurately and consistently determining sensor visibility of a range detection sensor comprised in a tramming assist arrangement; also taking an environmental context into account. The disclosed method further has the advantage of allowing improvements to maintenance planning for such tramming assist arrangements; avoiding undue stops during scheduled work shifts without compromising safety. Moreover the disclosed method has the advantage that it can be easily implemented in existing work machines.

According to a second aspect of the present disclosure, there is provided a computer program product comprising a non-transitory computer readable medium having thereon a computer program comprising program instructions loadable into processing circuitry and configured to cause execution of the method according to the first aspect when the computer program is run by the processing circuitry.

According to a third aspect of the present disclosure, a tramming assist arrangement is provided. The tramming assist arrangement is comprised in a work machine configured for autonomous tramming and/or remote control tramming at a construction site or in a mine environment. The tramming assist arrangement is configured to receive range readings from one or more laser range scanners to determine a distance from the respective sensor to path barriers present along a path travelled by the tramming work machine. The tramming assist arrangement further comprises processing circuitry. The processing circuitry of the tramming assist arrangement is configured to obtain a set of range readings from respective laser range scanners of the one or more laser range scanners; each range reading comprising a distance measurement. The processing circuit is further configured to attribute range readings comprising measured distances within configurable intervals to respective groups for each laser range scanner based on the measured distance. A level of dust impact on sensor visibility for the respective range detection sensors is determined based on the range readings attributed to the respective groups.

According to a fourth aspect of the present disclosure, a work machine is provided. The work machine is configured for autonomous tramming and/or remote control tramming at a construction site or as a mining machine in a mine environment. The work machine comprises the tramming assist arrangement according to the third aspect.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a work machine comprising a tramming assist arrangement according to the present disclosure;
Figure 2 provides a flowchart representation of example method steps performed in a tramming assist arrangement;
Figure 3 a-c discloses a simulated impact of applying the proposed method in an environment suffering from dust contamination;
Figure 4 discloses an example block diagram of tramming assist arrangement.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

It will be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

In the following description of exemplary embodiments, the same reference numerals denote the same or similar components.

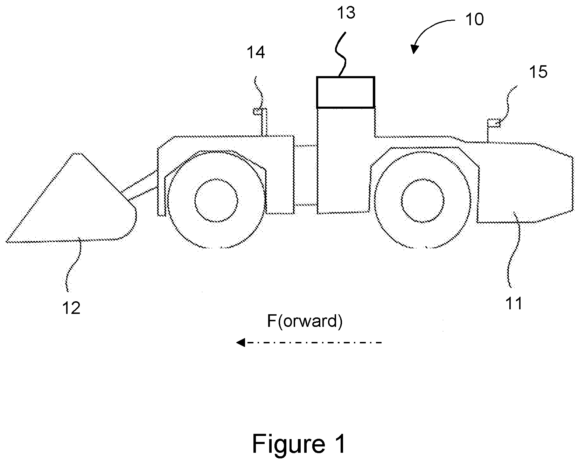

Figures 1 a work machine 10 in a side view. The work machine 10 is configured for tramming in autonomous mode and/or in a remote control mode, e.g., in a construction site environment or as a mining machine in a mine environment or in an underground mine environment. In the context of the present disclosure, tramming means performing a transport operation to relocate from a first position to a second position within the work environment. The remote control mode may be used prior to activating the work machine for tramming in the autonomous mode; following tramming in autonomous mode the remote control mode may be used before ending operation with the work machine or as an intermediate mode prior to re-initiating the autonomous mode. The illustrated work machine 10 is a loader/hauler comprising a vehicle body 11, a bucket 12, and a tramming assist arrangement 13. In the context of the present disclosure, the tramming assist arrangement is capable of localization of the work machine in the work environment and/or of obstacle detection, e.g., to support a collision avoidance functionality implemented in the work machine. The work machine further comprises one or more range detection sensors, e.g., a front range detection sensor 14 and a rear range detection sensor 15, that are configured to determine a distance from the respective sensor to path barriers present along a path travelled by the work machine during tramming. The one or more range detection sensors are mounted on the work machine, the mounting positions being determined by the intended field of application of the work machine. When mounting the range detection sensors on a machine comprising a bucket or scoop, one range detection sensor may be arranged on top of the work machine, e.g., at a position maintaining a line of sight for the range detection sensor from the vehicle to the surrounding environment also when the bucket is in a lowered position, in a partly lifted position and/or in a lifted position. Further range detection sensors may be provided at a lower part of the work machine so that obstacles on the ground may be detected at times when the bucket is in a partly lifted position and/or in a lifted position, i.e., not obscuring the line of sight for range detection sensor mounted on a lower part of the work machine. Consequently, the mounting of range detection sensors as visualized in Figure 1 is only for general understanding and the below proposed method will be equally applicable regardless of the where the range detection sensor is mounted on the work machine. The one or more range detection sensors 14, 15 may optionally be comprised in the tramming assist arrangement. In addition to such range detection sensors, the tramming assist arrangement may also comprise other type of sensors applicable for use during an autonomous or remote control mode, e.g., image detection sensors.

The present disclosure is in no way limited to a loader/hauler type of work machine 10 as disclosed in Figure 1; the proposed method and arrangement is equally applicable to other types of work machines, as well as to mining machines, such as dumpers, concrete spraying machines, drilling rigs and/or bolting rigs when configured to perform a remotely controlled or autonomous tramming/transportation operation to at least in part relocate from a first operational position to a second operational position, e.g., at a construction site, in a mine environment or in an underground mine environment.

In some examples, the range detection sensors 14, 15 are laser range scanners configured to measure distances using laser beam technology in given directions and with given angles. In some examples, laser range scanners are used to measure the distance to an object/barrier, e.g., a rock wall, a rock, a work machine or any other path barrier along the path travelled by the work machine during tramming. The front range detection sensor 14 may be used to measure a distance to a closest object/barrier in a forward direction F. In some examples, the laser range scanner will provide range readings for each whole degree ± 90 degrees from the respective longitudinal direction during a scan. Thus, each respective laser range scanner may measure the distance at 181 respective measurement points. As will be understood, it is possible to use laser range scanners which measure distance, obtain range readings, at a significantly higher resolution or at a significantly lower resolution. It is also possible to use laser range scanners which obtain range readings in a significantly wider direction, as well as those which measure distance in a more narrow direction. It is also possible to use a single omnidirectional range detection sensor to determine distance in any travelling direction of the vehicle or a rotating range detection sensor. In some examples a range detection sensor may be configured to repeatedly obtain range readings to determine distances in a narrower field of view, e.g., covering a field of view representing 30-45 degrees on each side of reference line representing the travelling direction of the work machine. Furthermore, the measurement points representing range readings from a range detection sensor on the vehicle may be performed with a higher resolution than the above suggested whole degree approach, e.g., providing the above suggested number of measurement points from within a range of 60-90 degrees. Moreover, each range detection sensor may be configured to obtain range readings reflecting distances in a cone shaped air space centred around, and propagating from the respective range detection sensor.

The range readings may be retrieved with a set, predetermined or configurable, periodicity, e.g., repeating a scanning operation once every other minute, once every minute, or much more frequently. The scanning operation may also be adapted to a speed of the work machine, so that a default number of range readings are obtained when the work machine travels with at default speed, while more frequent range readings are obtained when the work machine travels at higher speed. In some examples, range readings are first obtained in a first scanning direction of the range detection sensor, whereupon the scanning operation is repeated from another direction, e.g., performing the scanning in a reverse direction or any other suitable direction. In some examples, range readings may be obtained every 5-80 ms, preferably every 10-20 ms, e.g., at a frequency of 75Hz. The periodicity/frequency for obtaining range readings from the range detection sensors may also be varied depending on a visibility for the range detection sensors, operational information for the work machine, e.g., a loading operation performed with the bucket, or a velocity of the work machine 10 when performing the tramming operation. In some examples, the granularity for range readings in time and space is configurable by the operator, e.g., by providing instructions through a user interface to the tramming assist arrangement.

In some examples, the range detection sensor is selected from a group of Sonar, Lidar, and Radar sensors.

The range detection sensors and associated range detection techniques are used to provide range readings to processing circuitry in the tramming assist arrangement 13 of the work machine 10. As previously explained, the tramming assist arrangement is capable of localization of the work machine in the work environment and/or of obstacle detection, e.g., to support a collision avoidance functionality implemented in the work machine. Thus, the range readings may be processed to determine an allowed travel route or allowed twodimensional travel space of the work machine. The range readings may also be processed to determine objects or path barriers present along a path travelled by the work machine. Furthermore, the range readings may be mapped to reference readings in order to locate the work machine along a predetermined or pre-recorded route. Thus, tramming assist of a work machine at a construction site or within a mine tunnel may at least in part involve a determining of distances to path barriers, e.g., tunnel walls or other obstacles along the path, e.g., during autonomous tramming of a work machine or during remotely controlled tramming.

In the work environment, e.g., at a construction site, or in a mine environment - an underground mine environment or open pit mine environment, range readings from a range detection sensor may be affected by dirt on a lens of the sensor or by pollution in an ambient air, e.g., from dust particles. The dirty lens or the polluted air, may affect the accuracy of the range readings provided by the range detection sensor, e.g., laser scanner. These range readings may be disregarded so that they do not affect the tramming operation of the work machine in a negative manner. However, when disregarding range readings, caution must be exercised so that the tramming assist functionality is not negatively impacted. Historically, allowing or disallowing continued tramming of the work machine has been based on a count of valid readings in the set of range readings, e.g., comparing the count of valid readings to an empirically determined threshold value. However, while ensuring high operational safety during autonomous or remote control tramming of work machines, the count based method may result in tramming operations being prematurely discontinued. Such premature discontinuation of the tramming operation may have significant impact in terms of production loss and undue operational expenses; each discontinued operation requiring operator attention at the location of the work machine. Thus, there is a remaining need to extend the operating capability of the autonomous/remotely controlled work machine without comprising safety at the construction site, in the mine environment, or in the underground mine environment.

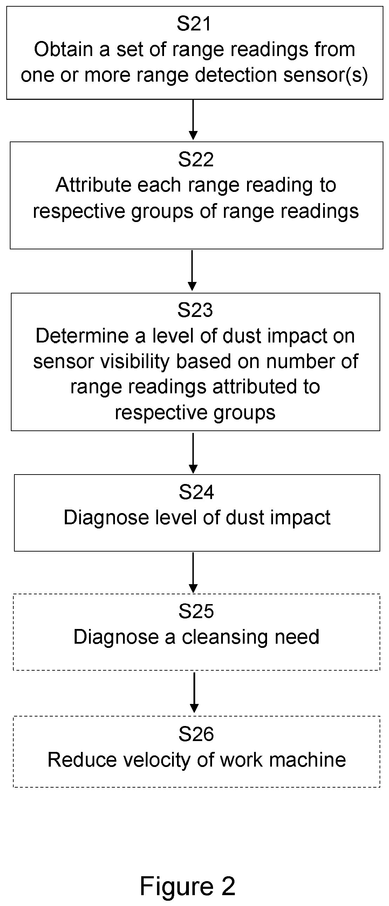

Turning to Figure 2, a method for diagnosing dust impact on range detection sensor capability is schematically disclosed. The method will be explained in detail below with reference to the flow chart representation of example method steps depicted in Figure 2. The method may be performed in the work machine disclosed in Figure 1. The example method steps are performed by tramming assist arrangement comprised in the work machine.

As discussed with reference to Figure 1, the work machine 10 is configured for autonomous tramming and/or remote control tramming/transportation in a work environment, e.g., at a construction site, in a mine environment, or in an underground mine environment. In the context of the present disclosure, tramming means performing a transport operation to relocate from a first position to a second position within the work environment. The work machine 10 may be configured to travel at a certain speed in a forward or backward direction, e.g., tramming at a default tramming velocity. The work machine 10 comprises one or more range detection sensors 14, 15 configured to provide range readings to a tramming assist arrangement 13. As previously explained, the tramming assist arrangement 13 is capable of localization of the work machine 10 in the work environment and/or of obstacle detection, e.g., to support a collision avoidance functionality implemented in the work machine. The tramming assist arrangement 13 is configured to determine a distance from the respective sensor to any path barriers present along a path travelled by the work machine during tramming.

The disclosed method for diagnosing a level of dust impact on one or more range detection sensors comprises the step S21 of obtaining respective sets of range readings from each range detection sensor; each range comprising a measured distance. Thus, each range reading reflects a distance between the respective range detection sensor and any path barrier present along the path travelled by the work machine during tramming.

In step S22, range readings are attributed to respective groups of range readings. Such groups of range readings are determined based on measured distance reflected by the respective range readings. Range readings reflecting a measured distance below a configurable, e.g., predetermined, minimum value are attributed S22 to respective first groups of range readings reflecting short distances. The groups of range readings comprises a first group of invalid range readings, i.e. range readings reflecting distances shorter than an allowable minimum distance. Range readings comprising measured distances reflecting a maximum distance measurable by the range detection sensor are attributed to respective second groups of range readings. Range readings comprising measured distances within a configurable, e.g., predetermined, interval are attributed to a third group. Thus, the attributing provides for a grouping or sorting operation. In some examples, it has been established that range readings <0.1 m usually reflect a dirty lens, while range readings within the contour of the machine, e.g., less than 1m, reflects dust in the air. Dust in the air may also result in range readings indicating a maximum distance measurable with the range detection sensor. For such a scenario, range readings reflecting a distance shorter than 0.1 m may be attributed to the first group; range readings reflecting a maximum distance measurable by the range detection sensor may be attributed to a second group, and range readings indicating a distance within the contour of the work machine, e.g., in the interval of 0.1 m to 1 m from the machine contour, may be attributed to a third group. Consequently, values defining the attribution criteria for the first, second, and third groups of range readings may be selected to represent a typical outcome of a range detection sensor providing inaccurate readings due to dust.

In step S23, a level of dust impact on sensor visibility is determined for the respective range detection sensors based on the range readings attributed to the respective groups.

In some examples, the level of dust impact is diagnosed S24 based on the determined visibility. The level of dust impact may be determined by deriving a distribution pattern for the range readings attributed to the respective groups, and in particular based on the range readings attributed to the above disclosed third group.

In some examples, a cleansing need is diagnosed S25 based on the determined sensor visibility.

Based on such diagnosing, estimates of a true cleansing need for the range detection sensor may be determined and used to optimize cleansing of the range detection sensor. Maintenance of the work machine may be scheduled taking into account the estimated cleansing needs.

Proper, improper or dubious range readings of the at least one range detection sensor may be asserted based on pattern recognition, e.g., by analysing a distribution pattern of the various range readings to the respective groups. Diagnosing S24 a level of dust impact or diagnosing a cleansing need based on the range detection capability of the respective range detection sensors is based on such a distribution pattern. In some examples, improper function of the at least one range detection sensor is diagnosed when the determined distribution pattern deviates from a reference distribution of range readings attributed to the first group. The tramming assist arrangement is configured to apply the result from the diagnosing during control of the tramming operation, e.g., reducing S26 a velocity of the work machine from a default tramming velocity when diagnosing a level of dust impact above a predetermined threshold level for at least one range detection sensor or diagnosing a cleansing need for at least one range detection sensor. Thus, if the available data does not fulfil the requirements for evenly distributed valid range readings, the tramming velocity may be reduced when travelling in a direction of a range detection reader diagnosed to provide improper or dubious range readings. The autonomous or remotely controlled tramming operation may also be stopped to reduce the risk of machine collision with the walls due to deficiencies in the tramming assist functionality.

In some examples, an automated lens cleaning operation is initiated following the diagnosing of a cleansing need.

The range detection sensor is a laser range scanner and wherein the set of range readings comprises range measurements performed during a scan. The scan may have an angle range corresponding to the angle range of the range detection sensor and with a resolution provided by the range detection sensor over a period of time required for at least one full scan of the range detection sensor, e.g. during 5-120 ms, preferably 10-20 ms. The laser scan may cover a full visual field of the range detection sensor or parts of the visual field of the range detection sensor. In other examples, the set of range readings comprises a subset of range readings reflecting a set, e.g., predetermined or configurable, segment of the visual field of the range detection sensor. In further examples, the set of range readings comprises range readings retrieved during multiple laser scans.

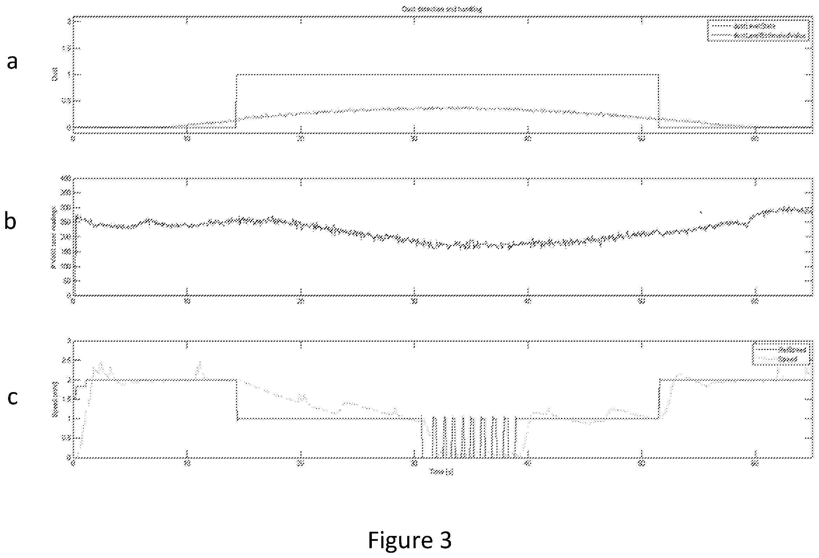

The method comprises repeating the steps for determining sensor visibility for an obtained further set of range readings and resuming the default tramming velocity in the autonomous and/or remote control mode when the determining does not indicate reduced visibility of at least one range detection sensor. The additional operation of determining sensor visibility for a further set of range readings, ensures that the level of dust impact has reached a safe level where sensor assisted tramming may be resumed. Figure 3 a-c reflects the improvements to dust detection using the above presented method. Figure 3a illustrates an estimated dust level and classification of dust state in terms of low and medium. The low level is represented by the numerical value 0 and a medium dust level is represented by the numerical value 1. Figure 3b illustrates valid range readings from the range detection sensors. Figure 3c illustrates a reference speed and measured speed of the work machine. In the visualized scenario, the reference speed of the work machine is reduced from a normal speed of 2m/s to 1 m/s when the level of dust increases to a medium value, i.e., when the level of dust impact is diagnosed to be above a threshold level, e.g., a predetermined threshold level. When the number of valid range readings falls below a threshold value for valid range readings, the velocity is set to 0. Contrary to the case in prior art solutions, there is no need to await a reactivation by an operator following a reduction of speed. Having diagnosed a significant level of dust impact using attribution of the range readings to the above disclosed groups and diagnosed that the work machine is exposed to a significant dust impact at a certain time, the tramming of the work machine may be resumed as soon as reduction of the level of dust impact has been confirmed. When the number of valid range readings increases, e.g., above a predetermined threshold value, tramming may be resumed at a default speed or reduced speed depending on the result from the diagnosing. Tramming of the work machine may thereby be continued without operator intervention, providing advantages and benefits in terms of increased productivity. When it has been confirmed that the level of dust impact is again low, tramming with the default speed may be resumed.

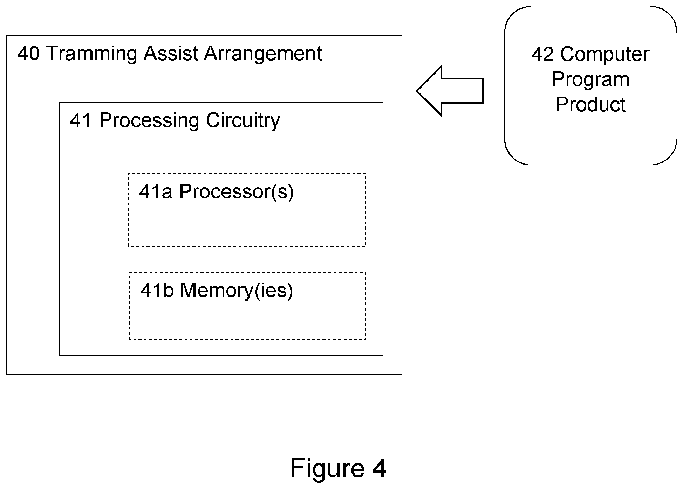

Turning to Figure 4, a block diagram illustrating a tramming assist arrangement 30 for a work machine is disclosed, e.g., the tramming assist arrangement 13 as comprised in the work machine 10 of Figure 1. The tramming assist arrangement 40 is configured to perform the above disclosed method. The tramming assist arrangement comprises processing circuitry 41 configured to obtain a set of range readings from at least one range detection sensor and to diagnose a range detection capability of the range detection sensor based on the obtained set of range readings and a determined distribution pattern of these range readings. The processing circuitry may comprises a processor 41a and a memory 41b. Figure 4 further illustrates an example computer program product 42 having thereon a computer program comprising instructions. The computer program product comprises a computer readable medium such as, for example a universal serial bus (USB) memory, a plug-in card, an embedded drive or a read only memory (ROM). The computer readable medium has stored thereon a computer program comprising program instructions that are into the processing circuitry 41, e.g., into the memory 41b. The program instructions may be executed by the processor 41a to perform the above disclosed method.

Thus, the computer program is loadable into data processing circuitry, e.g., into the processing circuitry 41 of Figure 4, and is configured to cause execution of embodiments for diagnosing range detection capability of the at least one range detection sensor.

The description of the example embodiments provided herein have been presented for purposes of illustration. The description is not intended to be exhaustive or to limit example embodiments to the precise form disclosed; modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of source nodes, target nodes, corresponding methods, and computer program products. It should be appreciated that the example embodiments presented herein may be practiced in combination with each other.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device or a network node.

Embodiments may appear within an electronic apparatus comprising arrangements, circuitry, and/or logic according to any of the embodiments described herein. Alternatively or additionally, an electronic apparatus may be configured to perform methods according to any of the embodiments described herein.

Generally, all terms used herein are to be interpreted according to their ordinary meaning in the relevant technical field, unless a different meaning is clearly given and/or is implied from the context in which it is used.

## Claims

1. A computer-implemented method for diagnosing a level of dust impact from dust in air on one or more laser range scanners comprised in a tramming assist arrangement of a mining machine configured for tramming in autonomous and/or remote control mode in an underground mine environment; the one or more laser range scanners configured to determine a distance from the respective sensor to path barriers present along a path travelled by the mining machine during tramming, the method comprising:
- obtaining respective sets of range readings (S21) from respective laser range scanners; each range reading comprising a measured distance;
- attributing (S22) range readings comprising measured distances within configurable intervals to respective groups for each laser range scanner based on the measured distances, wherein range readings comprising measured distances shorter than a configurable minimum distance are attributed to respective first groups, wherein range readings comprising measured distances longer than a configurable maximum distance are attributed to respective second groups, and wherein range readings comprising measured distances within an interval between the configurable minimum distance and the configurable maximum distance are attributed to respective third groups; and
- determining (S23) a level of dust impact from dust in air on sensor visibility for the respective laser range scanners based on the range readings attributed to the respective groups,
- reducing velocity (S26) of the mining machine from a default tramming velocity when diagnosing a level of dust impact from dust in air above a set threshold level for at least one laser range scanner,
- repeating the steps for determining a level of dust impact from dust in air on sensor visibility for an obtained further set of range readings; and
- resuming the default tramming velocity in the autonomous and/or remote control mode when the determining does not indicate a level of dust impact from dust in air above the set threshold level for at least one laser range scanner.

2. The method according to claim 1, wherein determining the distribution pattern comprises determining a number of range readings included in respective first groups of range readings and diagnosing a cleansing need when a first group of range readings comprises a number of consecutive range readings from the corresponding laser range scanner and the number of consecutive range readings exceeds a set threshold.

3. A tramming assist arrangement (40) comprised in a mining machine configured for autonomous tramming and/or remote control tramming in an underground mine environment; the tramming assist arrangement comprising one or more laser range scanners configured to determine a distance from the respective sensor to path barriers present along a path travelled by the tramming mining machine and processing circuitry (41) configured to:
- obtain respective sets of range readings from respective laser range scanners; each range reading comprising a measured distance;
- attributing range readings comprising measured distances within configurable intervals to respective groups for each laser range scanner based on the measured distance, wherein range readings comprising measured distances shorter than a configurable minimum distance are attributed to respective first groups, wherein range readings comprising measured distances longer than a configurable maximum distance are attributed to respective second groups, and wherein range readings comprising measured distances within an interval between the configurable minimum distance and the configurable maximum distance are attributed to respective third groups; and
- determine a level of dust impact from dust in air on sensor visibility for the respective laser range scanners based on the range readings attributed to the respective groups,
- reduce velocity of the mining machine from a default tramming velocity when diagnosing a level of dust impact from dust in air above a set threshold level for at least one laser range scanner,
- repeat the steps for determining a level of dust impact from dust in air on sensor visibility for an obtained further set of range readings; and
- resume the default tramming velocity in the autonomous and/or remote control mode when the determine level of dust impact from dust in air is above the set threshold level for at least one laser range scanner.

4. A mining machine (10) configured for autonomous tramming and/or remote control tramming in an underground mine environment, the mining machine comprising a tramming assist arrangement (13) according to claim 3.

5. A computer program product (42) comprising a non-transitory computer readable medium having thereon a computer program comprising program instructions loadable into processing circuitry of claim 3 and configured to cause execution of the method according to any of claims 1-2 when the computer program is run by the processing circuitry of claim 3.

## Patentansprüche

1. Computerimplementiertes Verfahren zum Diagnostizieren eines Ausmaßes einer Staubauswirkung von Staub in Luft auf einen oder mehrere Laserentfernungsmesser, die in einer Tramming-Assistenzanordnung einer Bergbaumaschine enthalten sind, die zum Tramming in einem autonomen und/oder Fernsteuermodus in einer Untertagebergbauumgebung ausgebildet ist; wobei der eine oder die mehreren Laserentfernungsmesser dazu ausgebildet sind, einen Abstand von dem jeweiligen Sensor zu Pfadbarrieren zu bestimmen, die entlang eines durch die Bergbaumaschine während Trammings zurückgelegten Pfads vorhanden sind, das Verfahren umfassend:
- Erhalten von jeweiligen Sätzen von Entfernungsmesswerten (S21) von jeweiligen Laserentfernungsmessern; wobei jeder Entfernungsmesswert einen gemessenen Abstand umfasst;
- Zuweisen (S22) von Entfernungsmesswerten, die gemessene Abstände umfassen, innerhalb konfigurierbarer Intervalle zu jeweiligen Gruppen für jeden Laserentfernungsmesser basierend auf den gemessenen Abständen, wobei Entfernungsmesswerte, die gemessene Abstände umfassen, die kürzer als ein konfigurierbarer Mindestabstand sind, jeweiligen ersten Gruppen zugewiesen werden, wobei Entfernungsmesswerte, die gemessene Abstände umfassen, die länger als ein konfigurierbarer Höchstabstand sind, jeweiligen zweiten Gruppen zugewiesen werden und
wobei Entfernungsmesswerte, die gemessene Abstände innerhalb eines Intervalls zwischen dem konfigurierbaren Mindestabstand und dem konfigurierbaren Höchstabstand umfassen, jeweiligen dritten Gruppen zugewiesen werden; und
- Bestimmen (S23) eines Ausmaßes einer Staubauswirkung von Staub in Luft auf eine Erkennbarkeit des Sensors der jeweiligen Laserentfernungsmesser basierend auf den Entfernungsmesswerten, die den jeweiligen Gruppen zugewiesen werden,
- Verringern einer Geschwindigkeit (S26) der Bergbaumaschine von einer Standard-Tramming-Geschwindigkeit, wenn für mindestens einen Laserentfernungsmesser ein Ausmaß einer Staubauswirkung von Staub in Luft über einem festgelegten Schwellenausmaß diagnostiziert wird,
- Wiederholen der Schritte zum Bestimmen eines Ausmaßes einer Staubauswirkung von Staub in Luft auf eine Erkennbarkeit des Sensors für einen erhaltenen weiteren Satz von Entfernungsmesswerten; und
- Wiederaufnehmen der Standard-Tramming-Geschwindigkeit in dem autonomen und/oder dem Fernsteuermodus, wenn das Bestimmen für mindestens einen Laserentfernungsmesser kein Ausmaß einer Staubauswirkung von Staub in Luft über dem festgelegten Schwellenausmaß angibt.

2. Verfahren nach Anspruch 1,
wobei Bestimmen des Verteilungsmusters Bestimmen einer Anzahl von Entfernungsmesswerten, die in jeweiligen ersten Gruppen von Entfernungsmesswerten eingeschlossen sind, und Diagnostizieren eines Reinigungsbedarfs umfasst, wenn eine erste Gruppe von Entfernungsmesswerten eine Anzahl von aufeinanderfolgenden Entfernungsmesswerten von dem entsprechenden Laserentfernungsmesser umfasst und die Anzahl von aufeinanderfolgenden Entfernungsmesswerten einen festgelegten Schwellenwert überschreitet.

3. Tramming-Assistenzanordnung (40), die in einer Bergbaumaschine enthalten ist, die für autonomes Tramming und/oder Fernsteuertramming in einer Untertagebergbauumgebung ausgebildet ist; wobei die Tramming-Assistenzanordnung einen oder mehrere Laserentfernungsmesser umfasst, die dazu ausgebildet sind, einen Abstand von dem jeweiligen Sensor zu Pfadbarrieren zu bestimmen, die entlang eines durch die Bergbaumaschine beim Tramming zurückgelegten Pfads vorhanden sind, und eine Verarbeitungsschaltung (41), die ausgebildet ist zum:
- Erhalten von jeweiligen Sätzen von Entfernungsmesswerten von jeweiligen Laserentfernungsmessern; wobei jeder Entfernungsmesswert einen gemessenen Abstand umfasst;
- Zuweisen von Entfernungsmesswerten, die gemessene Abstände umfassen, innerhalb konfigurierbarer Intervalle zu jeweiligen Gruppen für jeden Laserentfernungsmesser basierend auf dem gemessenen Abstand, wobei Entfernungsmesswerte, die gemessene Abstände umfassen, die kürzer als ein konfigurierbarer Mindestabstand sind, jeweiligen ersten Gruppen zugewiesen werden,
wobei Entfernungsmesswerte, die gemessene Abstände umfassen, die länger als ein konfigurierbarer Höchstabstand sind, jeweiligen zweiten Gruppen zugewiesen werden, und wobei Entfernungsmesswerte, die gemessene Abstände innerhalb eines Intervalls zwischen dem konfigurierbaren Mindestabstand und dem konfigurierbaren Höchstabstand umfassen, jeweiligen dritten Gruppen zugewiesen werden; und
- Bestimmen eines Ausmaßes einer Staubauswirkung von Staub in Luft auf eine Erkennbarkeit des Sensors für die jeweiligen Laserentfernungsmesser basierend auf den Entfernungsmesswerten, die den jeweiligen Gruppen zugewiesen werden,
- Verringern einer Geschwindigkeit der Bergbaumaschine von einer Standard-Tramming-Geschwindigkeit, wenn für mindestens einen Laserentfernungsmesser ein Ausmaß einer Staubauswirkung von Staub in Luft über einem festgelegten Schwellenausmaß diagnostiziert wird,
- Wiederholen der Schritte zum Bestimmen eines Ausmaßes einer Staubauswirkung von Staub in Luft auf eine Erkennbarkeit des Sensors für einen erhaltenen weiteren Satz von Entfernungsmesswerten; und
- Wiederaufnehmen der Standard-Tramming-Geschwindigkeit in dem autonomen und/oder dem Fernsteuermodus, wenn das bestimmte Ausmaß von Staubauswirkung von Staub in Luft für mindestens einen Laserentfernungsmesser über dem festgelegten Schwellenausmaß liegt.

4. Bergbaumaschine (10), die zum autonomen Tramming und/oder Fernsteuertramming in einer Untertagebergbauumgebung ausgebildet ist, wobei die Bergbaumaschine eine Tramming-Assistenzanordnung (13) nach Anspruch 3 umfasst.

5. Computerprogrammprodukt (42), das ein nichtflüchtiges, computerlesbares Medium umfasst, auf dem sich ein Computerprogramm befindet, das Programmanweisungen umfasst, die in die Verarbeitungsschaltung aus Anspruch 3 ladbar sind und dazu ausgebildet sind, eine Ausführung des Verfahrens nach einem der Ansprüche 1-2 zu bewirken, wenn das Computerprogramm durch die Verarbeitungsschaltung aus Anspruch 3 ausgeführt wird.

## Revendications

1. Procédé mis en œuvre par ordinateur pour diagnostiquer un niveau d'impact de poussière provenant de la poussière dans l'air sur un ou plusieurs dispositifs laser de balayage de mesure de distance compris dans un agencement d'assistance au déplacement d'une machine minière configurée pour se déplacer en mode autonome et/ou en mode de commande à distance dans un environnement minier souterrain ; les un ou plusieurs dispositifs laser de balayage de mesure de distance étant configurés pour déterminer une distance entre le capteur respectif et des obstacles présents le long d'un trajet parcouru par la machine minière pendant le déplacement, le procédé comprenant :
- l'obtention d'ensembles respectifs de lectures de mesure de distance (S21) à partir de dispositifs laser de balayage de mesure de distance respectifs ; chaque lecture de mesure de distance comprenant une distance mesurée ;
- l'attribution (S22) de lectures de mesure de distance comprenant des distances mesurées au sein d'intervalles configurables à des groupes respectifs pour chaque dispositif laser de balayage de mesure de distance sur la base des distances mesurées, dans lequel des lectures de mesure de distance comprenant des distances mesurées inférieures à une distance minimale configurable sont attribuées à des premiers groupes respectifs, dans lequel des lectures de mesure de distance comprenant des distances mesurées supérieures à une distance maximale configurable sont attribuées à des deuxièmes groupes respectifs, et
dans lequel des lectures de mesure de distance comprenant des distances mesurées au sein d'un intervalle entre la distance minimale configurable et la distance maximale configurable sont attribuées à des troisièmes groupes respectifs ; et
- la détermination (S23) d'un niveau d'impact de poussière provenant de la poussière dans l'air sur la visibilité du capteur pour les dispositifs laser de balayage de mesure de distance respectifs sur la base des lectures de mesure de distance attribuées aux groupes respectifs,
- la réduction de la vitesse (S26) de la machine minière à partir d'une vitesse de déplacement par défaut lors du diagnostic d'un niveau d'impact de poussière provenant de la poussière dans l'air supérieur à un niveau seuil défini pour au moins un dispositif laser de balayage de mesure de distance,
- la répétition des étapes de détermination d'un niveau d'impact de poussière provenant de la poussière dans l'air sur la visibilité du capteur pour un ensemble supplémentaire obtenu de lectures de mesure de distance ; et
- la reprise de la vitesse de déplacement par défaut en mode autonome et/ou en mode de commande à distance lorsque la détermination n'indique pas un niveau d'impact de poussière provenant de la poussière dans l'air supérieur au niveau seuil défini pour au moins un dispositif laser de balayage de mesure de distance.

2. Procédé selon la revendication 1,
dans lequel la détermination du profil de distribution comprend la détermination d'un nombre de lectures de mesure de distance incluses dans des premiers groupes respectifs de lectures de mesure de distance et le diagnostic d'un besoin de nettoyage lorsqu'un premier groupe de lectures de mesure de distance comprend un nombre de lectures de mesure de distance consécutives provenant du dispositif laser de balayage de mesure de distance correspondant et que le nombre de lectures de mesure de distance consécutives dépasse un seuil fixé.

3. Agencement (40) d'assistance au déplacement compris dans une machine minière configurée pour un déplacement autonome et/ou un déplacement par commande à distance dans un environnement minier souterrain ; l'agencement d'assistance au déplacement comprenant un ou plusieurs dispositifs laser de balayage de mesure de distance configurés pour déterminer une distance entre le capteur respectif et des obstacles présents le long d'un trajet parcouru par la machine minière en déplacement et une circuiterie de traitement (41) configurée pour :
- obtenir des ensembles respectifs de lectures de mesure de distance à partir de dispositifs laser de balayage de mesure de distance respectifs ; chaque lecture de mesure de distance comprenant une distance mesurée ;
- attribuer des lectures de mesure de distance comprenant des distances mesurées au sein d'intervalles configurables à des groupes respectifs pour chaque dispositif laser de balayage de mesure de distance sur la base des distances mesurées, dans lequel des lectures de mesure de distance comprenant des distances mesurées inférieures à une distance minimale configurable sont attribuées à des premiers groupes respectifs,
dans lequel des lectures de mesure de distance comprenant des distances mesurées supérieures à une distance maximale configurable sont attribuées à des deuxièmes groupes respectifs, et dans lequel des lectures de mesure de distance comprenant des distances mesurées au sein d'un intervalle entre la distance minimale configurable et la distance maximale configurable sont attribuées à des troisièmes groupes respectifs ; et
- déterminer un niveau d'impact de poussière provenant de la poussière dans l'air sur la visibilité du capteur pour les dispositifs laser de balayage de mesure de distance respectifs sur la base des lectures de mesure de distance attribuées aux groupes respectifs,
- réduire la vitesse de la machine minière à partir d'une vitesse de déplacement par défaut lors du diagnostic d'un niveau d'impact de poussière provenant de la poussière dans l'air supérieur à un niveau seuil défini pour au moins un dispositif laser de balayage de mesure de distance,
- répéter les étapes de détermination d'un niveau d'impact de poussière provenant de la poussière dans l'air sur la visibilité du capteur pour un ensemble supplémentaire obtenu de lectures de mesure de distance ; et
- reprendre la vitesse de déplacement par défaut en mode autonome et/ou en mode de commande à distance lorsque le niveau déterminé d'impact de poussière provenant de la poussière dans l'air est supérieur au niveau seuil défini pour au moins un dispositif laser de balayage de mesure de distance.

4. Machine minière (10) configurée pour un déplacement autonome et/ou un déplacement par commande à distance dans un environnement minier souterrain, la machine minière comprenant un agencement (13) d'assistance au déplacement selon la revendication 3.

5. Produit programme (42) d'ordinateur comprenant un support non transitoire lisible par ordinateur sur lequel se trouve un programme informatique comprenant des instructions de programme pouvant être chargées dans une circuiterie de traitement selon la revendication 3 et configurées pour provoquer l'exécution du procédé selon l'une quelconque des revendications 1 à 2 lorsque le programme informatique est exécuté par la circuiterie de traitement selon la revendication 3.
